# EUROPEAN PATENT APPLICATION

(11) **EP 2 990 273 A1**
(43) Date of publication of application: **02.03.2016**
(21) Application number: 13882906.4
(22) Date of filing: 26.04.2013
(51) Int. Cl.: B60R 21/00, G08G 1/16

(54) **PARKING ASSIST DEVICE**

(71) Applicant: TOYOTA JIDOSHA KABUSHIKI KAISHA, Toyota-shi, Aichi 471-8571 (JP)
(72) Inventor: HATA, Keisuke, Toyota-shi Aichi 471-8571 (JP); ISHIJIMA, Hironobu, Toyota-shi Aichi 471-8571 (JP); YAMAZAKI, Eriko, Toyota-shi Aichi 471-8571 (JP)
(74) Representative: TBK
(86) International application number: PCT/JP2013/062438
(87) International publication number: WO 2014/174676

(57) **Abstract**

An electronic control unit (9) assists parking of a host vehicle into a parking space. Ultrasonic sensors (6, 8) detect the shape of the side edge of a road and the presence of an obstacle at the road edge. The electronic control unit (9) sets one corner of the obstacle positioned on the side opposite to the road side edge as an originating corner, sets an imaginary line that follows the shape of the road side edge and extends from the originating corner, and recognizes the space between the imaginary line and the road side edge as a parking space. The electronic control unit (9) then determines whether the vehicle can be parked in the recognized parking space.

## Description

### TECHNICAL FIELD

The present invention relates to a parking assistance device.

### BACKGROUND ART

Conventionally, various devices for assisting parking at a parking space are known. Such a parking assistance device, for example, instructs a driver on operation of the steering wheel required for parking or automatically controls the steering wheel in place of the driver.

In order to perform such parking assistance, it is necessary to detect a parking space at which the vehicle is able to park. Therefore, as one example, when there are two vehicles parked along a side edge of a road that is curved in a concaved manner with respect to the host vehicle and there is a parking space between the two vehicles, the device described in Patent Document 1 connects the road center side back end corner of the vehicle parked in front and the road center side front end corner of the vehicle parked behind with a straight imaginary line, and recognizes the space between the imaginary line and the side edge of the road as a parking space.

### PRIOR ART DOCUMENT

### Patent Document

Patent Document 1: Japanese Laid-Open Patent Publication No. 2011-136680 (Fig. 5)

### SUMMARY OF THE INVENTION

### Problems that the Invention is to Solve

The method, as described above, of setting an imaginary line and recognizing a space between the imaginary line and the side edge of the road as a parking space may be applied to a case in which there are two vehicles parking along the side edge of a straight road. However, since the shape of the side edge of the road is not taken into account in setting of the imaginary line, there is a problem as described below when parking the host vehicle along the side edge of a road that is curved in a convex manner with respect to the host vehicle.

Specifically, the distance between the imaginary line and the side edge of the road that is curved in a convex manner with respect to the host vehicle is different from the distance between the imaginary line and the side edge of the straight road, and the distance between the imaginary line and the side edge of the road is shorter in the case of the side edge of the curved road than in the case of the side edge of the straight road. Therefore, depending on the case, the distance between an imaginary line and the side edge of a road may become smaller than the width of the host vehicle. In this case, it may be determined that parking is impossible even though there is actually a parkable space.

An objective of the present invention is to provide a parking assistance device capable of reliably detecting a parkable space.

### Means for Solving the Problems

To achieve the foregoing objective and in accordance with one aspect of the present invention, a parking assistance device adapted to assist parking of a host vehicle at a parking space is provided. The device includes a detector, a recognizing section and a determining section. The detector is configured to detect a shape of a side edge of a road and an obstacle at the side edge of the road. The recognizing section is configured to set one corner of the obstacle on a side opposite to the side edge of the road as an originating corner, set an imaginary line that follows the shape of the side edge of the road and extends from the originating corner, and recognize a space between the imaginary line and the side edge of the road as a parking space. The determining section is configured to determine whether parking of the host vehicle is possible at the parking space recognized by the recognizing section.

According to this configuration, a parking space in accordance with the shape of the side edge of the road is recognized by setting an imaginary line that follows the shape of the side edge of the road. Therefore, if there is actually a parkable space, it is determined that the host vehicle can be parked at the recognized parking space. Accordingly, it is possible to reliably detect a parkable space.

In the above parking assistance device, the recognizing section is preferably configured to set the imaginary line, when the shape of the side edge of the road detected by the detector is curved in a convex manner toward the host vehicle.

In the above parking assistance device, when two obstacles are detected by the detector and a distance from an originating corner of a first one of the obstacles to the side edge of the road is different from a distance from an originating corner of a second one of the obstacles to the side edge of the road, the recognizing section is preferably configured to extend the imaginary line from the originating corner of one of the obstacles of which the distance to the side edge of the road is longer.

When there are two obstacles with the parking space in between along the side edge of the road, there may be a case in which the distance from the originating corner of a first one of the two obstacles to the side edge of the road is different from the distance from the originating corner of a second one of the two obstacles to the side edge of the road. For example, when the two obstacles are different in size, the distance from the originating corner of the larger one of the obstacles to the side edge of the road is longer than the distance from the originating corner of the smaller one of the obstacles to the side edge of the road. Further, even when the two obstacles are substantially in the same size, when the distances from the side edge of the road to the obstacles are different from each other, the distance between the originating corner of the obstacle that is more distant from the side edge of the road and the side edge of the road is longer than the distance between the originating corner of the obstacle that is closer to the side edge of the road and the side edge of the road. In such a case, the width of the parking space recognized by the recognizing section is longer in a case in which the imaginary line is extended from the originating corner of which the distance to the side edge of the road is longer than in a case in which the imaginary line is extended from the originating corner of which the distance to the side edge of the road is shorter. Accordingly, the space is easily determined by the determining section to be parkable. Therefore, as described above, when the distances from the originating corners to the side edge of the road are different from each other, extending the imaginary line from the originating corner of which the distance to the side edge of the road is longer allows the set parking space to be easily determined to be parkable by the determining section.

In the above parking assistance device, the determining section is preferably configured to determine that parking of the host vehicle at the parking space is possible, when a length of the host vehicle is shorter than a length of the parking space, and a width of the host vehicle is shorter than a width of the parking space.

In the above parking assistance device, the determining section is preferably configured to determine that parking of the host vehicle at the parking space is possible when an entire area occupied by the host vehicle will fit into the parking space.

### BRIEF DESCRIPTION OF THE DRAWINGS

Fig. 1 is a schematic diagram of a vehicle to which a parking assistance device according to one embodiment is applied.
Fig. 2 is a schematic diagram showing a movement of the vehicle when detecting a parking space in the embodiment.
Fig. 3 is a schematic diagram showing recognition of a parking space along a straight road in the embodiment.
Fig. 4 is a schematic diagram showing recognition of a parking space along a curved road.
Fig. 5 is a schematic diagram showing recognition of a parking space along a curved road in the embodiment of Fig. 1.
Fig. 6 is a flowchart showing an execution procedure of parking assistance control in the embodiment.
Fig. 7 is a schematic diagram showing a manner of setting of an imaginary line in a modification of the embodiment.
Fig. 8 is a schematic diagram showing a manner of setting of an imaginary line in a modification of the embodiment.
Fig. 9 is a schematic diagram showing recognition of a parking space along a curved road in a modification of the embodiment.
Fig. 10 is a schematic diagram showing recognition of a parking space along a curved road in a modification of the embodiment.

### MODES FOR CARRYING OUT THE INVENTION

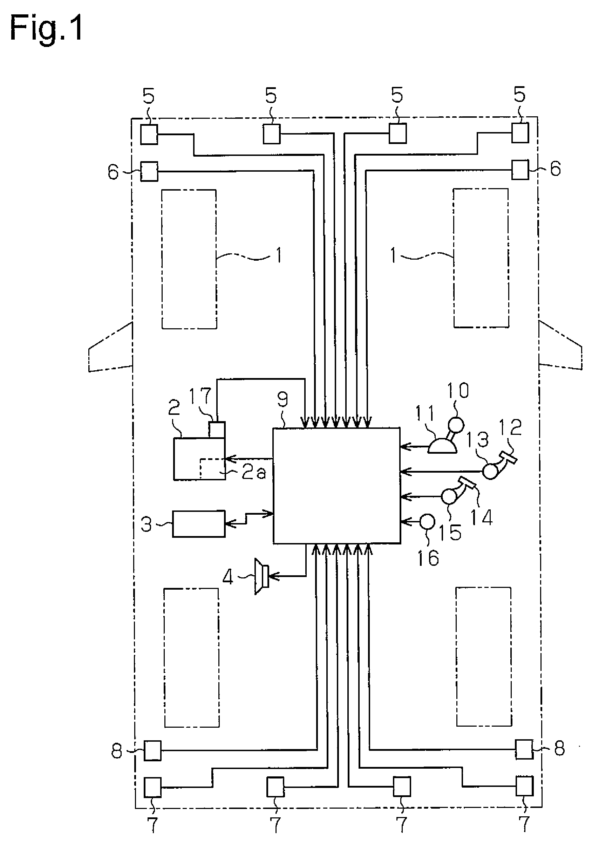

A parking assistance device according to one embodiment will now be described with reference to Figs. 1 to 6.

As shown in Fig. 1, a vehicle provided with a parking assistance device includes steerable wheels 1 for adjusting the traveling direction of this vehicle. The steering angle of the steerable wheels 1 is adjusted by a steering device 2.

The steering device 2 performs steering of the steerable wheels 1 through a steering operation by the driver and has a function for assisting the steering operation by the driver with a motor 2a. The steering device 2 is also able to perform steering of the steerable wheels 1 only with the motor 2a, regardless of the presence of the steering operation by the driver.

The vehicle includes a display panel 3 and a loudspeaker 4, which are located in front of the driver's seat. The display panel 3 displays information or the like regarding driving and accepts various operations by the driver, and the loudspeaker 4 notifies the driver of the information or warning regarding driving with sound.

In the vehicle, a plurality of clearance sonars 5 for sensing objects near the vehicle is installed at the front end (the upper end in the figure). Further, an ultrasonic sensor 6 as a detector for sensing objects on the side of the vehicle in the width direction and structures such as a curbstone located on the side edge of a road is installed at the front part of either side of the vehicle in the width direction (the right-left direction in the drawing). Moreover, a plurality of clearance sonars 7 for sensing objects near the vehicle is installed at the rear end (the lower end in the drawing) of the vehicle. An ultrasonic sensor 8 as a detector for sensing objects on the side of the vehicle in the width direction and structures such as a curbstone located on the side edge of a road is installed at the back part of either side of the vehicle in the width direction.

The clearance sonars 5 and 7, and the ultrasonic sensors 6 and 8 are connected to an electronic control unit 9 that performs various types of control of the vehicle.

The electronic control unit 9 is connected to a shift position sensor 11 for detecting the operated position of a shift lever 10 operated by the driver, an accelerator position sensor 13 for detecting the operated amount of the accelerator pedal 12 depressed by the driver, and a brake switch 15 for detecting whether a brake pedal 14 is pressed by the driver. Further, the electronic control unit 9 is connected to a wheel speed sensor 16 for detecting a rotation speed of wheels of the vehicle (such as the steerable wheels 1), and an angle sensor 17 for detecting the angle of steering operation by the steering device 2.

The electronic control unit 9 controls operation of the steering device 2, the display panel 3, and the loudspeaker 4 and receives operation signals of the display panel 3, and switches, which are operated by the driver.

The electronic control unit 9 assists, when parking the vehicle at a predetermined parking space, entry of the vehicle into the parking space. As the parking assistance, the electronic control unit 9 performs an operation of the steerable wheels 1 in order to park the vehicle at the parking space through automatic control by the steering device 2 (the motor 2a) in place of the steering operation by the driver. In execution of the parking assistance, parking control to move the vehicle to the parking space can be performed by a known method. The parking control can be executed in the following manner, for example.

First, a parking space for the vehicle is detected. Subsequently, if the vehicle is able to park at the detected parking space, a parking route for guiding the vehicle to the parking space is calculated. Then, in order to move the vehicle along the calculated parking route, the driver is supplied with an instruction regarding operations of the accelerator pedal 12, the brake pedal 14, and the shift lever 10, and automatic control of the steering device 2 (the motor 2a) is performed in accordance with the operation of the driver based on the instruction.

In the parking control, adjustment of the driving force of the vehicle, operation of the break, or change of the shift position may be performed automatically using the electronic control unit 9 in addition to the automatic control of the steering device 2. Further, in place of the automatic control of the steering device 2, it is possible to instruct the driver about the steering operation required for moving the vehicle along the parking route using the display panel 3 and the loudspeaker 4.

In the meantime, it is necessary to first detect a parking space in order to perform the parking control. Specifically, it is necessary to recognize the parking space, and to determine whether parking at the recognized parking space is possible. The electronic control unit 9 detects the parking space in the following manner.

First, when a request from the driver for execution of the parking assistance is detected based on an operation signal of the display panel 3 or the switch, search for a parking space is started by the ultrasonic sensors 6 provided on the sides of a host vehicle A.

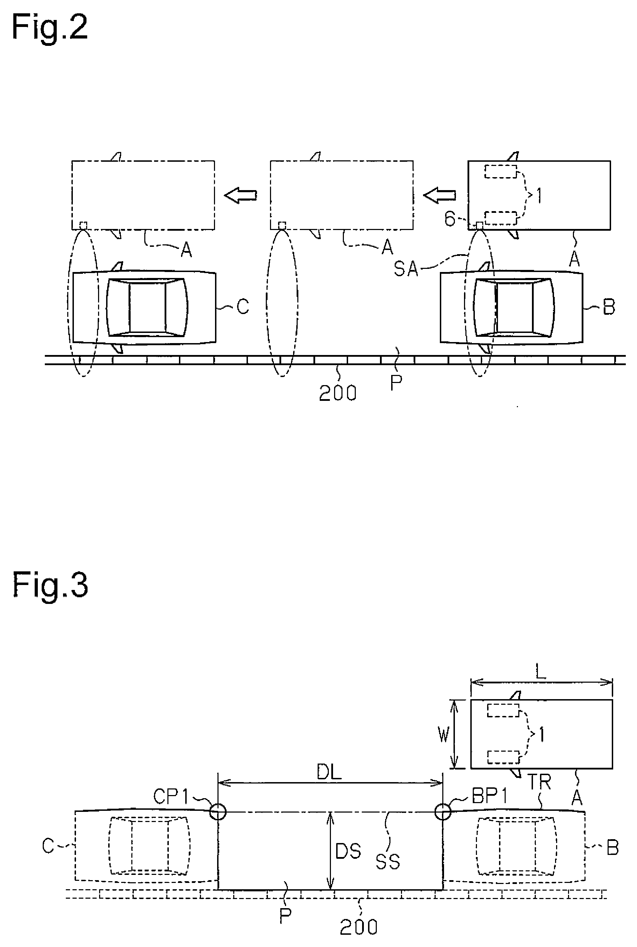

Fig. 2 shows a case in which a first vehicle B and a second vehicle C are parked along a straight curbstone 200, which constitutes the side edge of the road, and there is a parking space P for parking the host vehicle A between the first vehicle B and the second vehicle C. In this case, the first vehicle B, the curbstone 200, and the second vehicle C are detected sequentially as the host vehicle A moves forward. By such detection, the electronic control unit 9 is able to learn the shapes of the first vehicle B, the curbstone 200, and the second vehicle C, the position of the host vehicle A relative to the first vehicle B, the position of the host vehicle A relative to the curbstone 200, and the position of the host vehicle A relative to the second vehicle C.

Fig. 3 shows detection data of an ultrasonic sensor 6. A solid line shown in Fig. 3 indicates a trace line TR generated based on the detection data of the ultrasonic sensor 6 that has detected the first vehicle B, the curbstone 200, and the second vehicle C shown in Fig. 2. The trace line TR shows the shapes of the first vehicle B, the curbstone 200, and the second vehicle C, which have been detected by the ultrasonic sensor 6.

The electronic control unit 9 sets an imaginary straight line SS, which is a straight line connecting a first corner BP1, which is one corner at the front end of the first vehicle B on the side opposite to the curbstone 200 (one of the corners that are distant from the curbstone 200), with a second corner CP1, which is one corner at the rear end of the second vehicle C on the side opposite to the curbstone 200 (one of the corners that are distant from the curbstone 200). Then, the electronic control unit 9 recognizes a space between the imaginary straight line SS and the curbstone 200 as a parking space P.

Further, the electronic control unit 9 calculates the minimum distance between the front end of the first vehicle B and the rear end of the second vehicle C (e.g., the distance between the first corner BP1 and the second corner CP1) as a parking length DL, which is the length of the detected parking space P, and calculates the minimum distance between the imaginary straight line SS and the curbstone 200 as a parking width DS, which is the width of the detected parking space P.

Then, if the parking length DL is equal to or longer than a length obtained by adding the vehicle length L of the host vehicle A and a predetermined margin α, and the parking width DS is equal to or greater than a width obtained by adding the vehicle width W of the host vehicle A and a predetermined margin β, the electronic control unit 9 determines that the parking space P is a parkable space at which the host vehicle A can be parked and starts the parking control.

In the meantime, in a case in which the space between the imaginary straight line SS and the curbstone is detected as the parking space P, there is a problem as described below when attempt is made to park the host vehicle A along a curbstone 100, which constitutes the side edge of the road that is curved in a convex manner with respect to the host vehicle A.

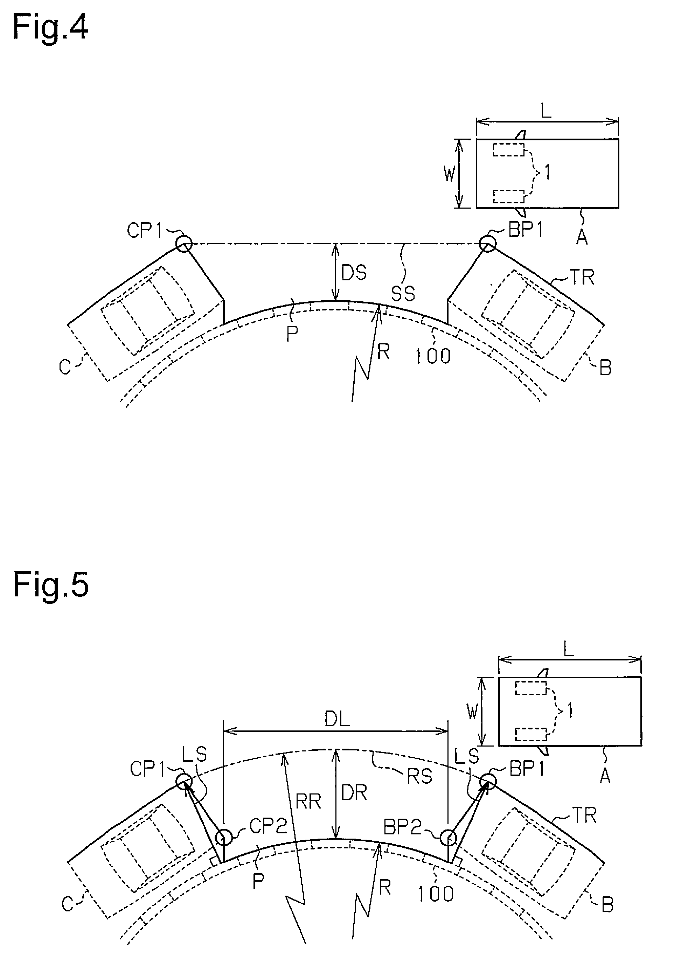

As shown in Fig. 4, the parking width DS between the curbstone 100, which is curved in a convex manner with respect to the host vehicle A, and the imaginary straight line SS is different from the parking width DS between the straight curbstone 200 shown in Fig. 3 and the imaginary straight line SS. Specifically, the parking width DS to the curved curbstone 100 is shorter than the parking width DS to the straight curbstone 200. Therefore, depending on the case, the calculated parking width DS may become smaller than the length obtained by adding the vehicle width W of the host vehicle A and the predetermined margin β. In this case, there is a possibility that it is determined that the host vehicle A cannot be parked even though it is actually possible to park the host vehicle A at the detected parking space P.

Therefore, in the present embodiment, when the shape of the curbstone detected by the ultrasonic sensor 6 is curved, the parking space P is recognized and the width of the recognized parking space P is calculated, taking the detected shape of the curbstone into account.

Specifically, as shown in Fig. 5, the electronic control unit 9 calculates an imaginary line RS that follows the shape of the curbstone 100, for example, an imaginary line RS that is parallel to the shape of the curbstone 100. Then, the electronic control unit 9 takes the first corner BP1 of the first vehicle B as an originating corner, extends the imaginary line RS from the originating corner to the second vehicle C, and recognizes the space between the imaginary line RS and the curbstone 100 as a parking space P.

Setting of such an imaginary line RS can be performed as needed. For example, as shown in Fig. 5, a curvature radius R of the detected curved curbstone 100 is calculated using the electronic control unit 9. Then, the minimum distance LS between the curbstone 100 and the first corner BP1 is calculated, and an imaginary curvature radius RR is calculated by adding the calculated minimum distance LS to the curvature radius R of the curbstone 100. Subsequently, the imaginary line RS of which the curvature radius is the imaginary curvature radius RR and which extends from the first corner BP1 of the first vehicle B toward the second vehicle C is set.

The minimum distance LS between the curbstone 100 and the second corner CP1 is calculated, and the imaginary curvature radius RR is calculated by adding the calculated minimum distance LS to the curvature radius R of the curbstone 100. Subsequently, the imaginary line RS of which the curvature radius is the imaginary curvature radius RR and which extends from the second corner CP1 of the second vehicle C toward the first vehicle B is calculated.

Further, as another manner of setting the imaginary line RS, a plurality of coordinate points expressing the curbstone 100 may be calculated, and the imaginary line RS extending from the originating corner may be set based on the calculated coordinate points and the coordinate of the originating corner (the first corner BP1 or the second corner CP1).

Moreover, as another manner of setting the imaginary line RS, a function expression expressing the curbstone 100 may be calculated, and the imaginary line RS extending from the originating corner may be set based on the calculated function expression and the coordinate of the originating corner (the first corner BP1 or the second corner CP1).

Then, the electronic control unit 9 calculates the minimum distance between the imaginary line RS and the curbstone 100, sets the calculated value as an arc width DR, and determines whether the arc width DR is equal to or greater than the width obtained by adding the vehicle width W of the host vehicle A and the predetermined margin β, thereby determining whether it is possible to park the host vehicle A at the parking space P set in the above manner.

The electronic control unit 9 constitutes a recognizing section for setting the imaginary line RS and recognizing the parking space P, and a determining section for determining whether parking at the recognized parking space P is possible.

The arc width DR is set in the above manner while taking the shape of the curbstone 100 into account, and is greater than the parking width DS. Therefore, as compared to the parking width DS, the arc width DR is more likely to become equal to or greater than the width obtained by adding the vehicle width W of the host vehicle A and the predetermined margin β. Accordingly, the frequency of execution of the parking control when attempting to park the host vehicle A along the curved curbstone 100 is increased.

Incidentally, as shown in Fig. 5, when the first vehicle B and the second vehicle C are parked along the curbstone 100 of a road curved in a convex manner with respect to the host vehicle A, the distance between a third corner BP2, which is one corner at the front end of the first vehicle B on the side closer to the curbstone 100 and a fourth corner CP2, which is one corner at the rear end of the second vehicle C on the side closer to the curbstone 100, is defined as the minimum distance between the front end of the first vehicle B and the rear end of the second vehicle C. Therefore, the distance between the third corner BP2 and the fourth corner CP2 is calculated as the parking length DL.

Next, a sequence of the procedure for operation of executing the parking assistance control will be described.

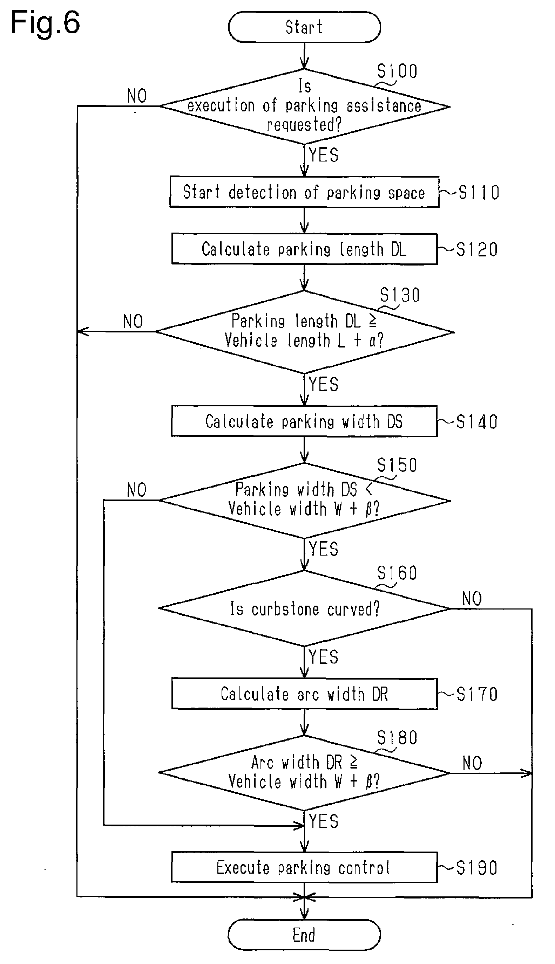

As shown in Fig. 6, upon starting of the procedure for the operation, the electronic control unit 9 determines whether there is a request for execution of the parking assistance (S100). Then, if there is no request for execution of the parking assistance (S100: NO), the electronic control unit 9 terminates the operation.

If there is a request for execution of the parking assistance, the electronic control unit 9 starts detecting the parking space P by starting a search by the ultrasonic sensor 6 (S110).

Next, when two parked vehicles with a parking space P in between are detected, the electronic control unit 9 calculates the parking length DL (S120). Then, the electronic control unit 9 determines whether the parking length DL is equal to or longer than a length obtained by adding the vehicle length L of the host vehicle A and the predetermined margin α (S130).

If the parking length DL is shorter than the length obtained by adding the vehicle length L of the host vehicle A and the predetermined margin α (S130: NO), the electronic control unit 9 determines that the host vehicle A cannot be parked at the parking space P since the length of the detected parking space P is too short for the vehicle length L, and terminates the operation.

In contrast, if the parking length DL is equal to or longer than the length obtained by adding the vehicle length L of the host vehicle A and the predetermined margin α (S130: YES), the electronic control unit 9 determines that the length of the detected parking space P is sufficiently long for the vehicle length L.

Thereafter, the electronic control unit 9 calculates the parking width DS (S140). Then, the electronic control unit 9 determines whether the parking width DS is smaller than a width obtained by adding the vehicle width W of the host vehicle A and the predetermined margin β (S150).

If the parking width DS is not smaller than the width obtained by adding the vehicle width W of the host vehicle A and the predetermined margin β (S150: NO), that is, if the parking width DS is equal to or greater than the width obtained by adding the vehicle width W of the host vehicle A and the predetermined margin β, the electronic control unit 9 determines that the width of the detected parking space P is sufficiently wide for the vehicle width W. Since it has been determined that the length of the detected parking space P is sufficiently long for the vehicle length L in the operation of Step S130, the electronic control unit 9 determines that the detected parking space P is sufficiently wide to park the host vehicle A. Then, the electronic control unit 9 executes the parking control as described above to park the host vehicle A at the detected parking space P (S190), and terminates the operation.

If it has been determined in Step S150 that the width of the parking width DS is shorter than the width obtained by adding the vehicle width W of the host vehicle A and the predetermined margin β (S150: YES), the electronic control unit 9 determines whether the shape of the detected curbstone is curved (S160).

Then, if the shape of the detected curbstone is not curved, but straight (S160: NO), the electronic control unit 9 determines that the host vehicle A cannot be parked at the parking space P since the width of the detected parking space P is too small for the vehicle width W, and terminates the operation.

In contrast, if the shape of the detected curbstone is curved (S160: YES), there is a possibility that the detected parking space P may be determined to be a parkable space by calculating the arc width DR. Thus, the electronic control unit 9 calculates the arc width DR (S170).

Next, the electronic control unit 9 determines whether the calculated arc width DR is equal to or greater than the width obtained by adding the vehicle width W of the host vehicle A and the predetermined margin β (S180). Then, if the arc width DR is smaller than the width obtained by adding the vehicle width W of the host vehicle A and the predetermined margin β (S180: NO), the electronic control unit 9 determines that the host vehicle A cannot be parked at the parking space P since the width of the detected parking space P is too small, and terminates the operation.

If the arc width DR is equal to or greater than the width obtained by adding the vehicle width W of the host vehicle A and the predetermined margin β (S180: YES), the electronic control unit 9 determines that the width of the detected parking space P is sufficiently wide for the vehicle width W. Since it has been determined that the length of the detected parking space P is sufficiently long for the vehicle length L in the operation of Step S130, the electronic control unit 9 determines that the detected parking space P is sufficiently wide to park the host vehicle A. Then, the electronic control unit 9 executes the parking control as described above to park the host vehicle A at the detected parking space P (S190), and terminates the operation.

Operation of the present embodiment will now be described.

With the parking assistance device described above, when the shape of the detected curbstone 100 is curved in a convex manner with respect to the host vehicle A, the imaginary line RS, which follows the shape of the curbstone 100, is set. Then, the space between the imaginary line RS and the curbstone 100 is recognized as a parking space P, and it is determined whether the host vehicle A can be parked at the recognized parking space P.

The above described embodiment achieves the following advantages.

(1) In a case in which the parking space P is recognized where the shape of the detected curbstone 100 is curved in a convex manner with respect to the host vehicle A, the parking space P in accordance with the shape of the curbstone 100 is recognized by setting the imaginary line RS following the shape of the curbstone 100. Accordingly, even when the shape of the detected curbstone 100 is curved in a convex manner with respect to the host vehicle A, for example, if there is actually a parkable space, it is determined that the host vehicle A can be parked at the recognized parking space P. Accordingly, it is possible to reliably detect the parkable space.
(2) When the vehicle length L is shorter than the parking length DL of the parking space P (Step S130 in Fig. 6: YES), and the vehicle width W is smaller than the arc width DR (Step S180 in Fig. 6: YES), it is determined that the host vehicle A can be parked at the parking space P. Accordingly, it is possible to reliably determine whether it is possible to park the host vehicle A at the recognized parking space P.

The above described embodiment may be modified as follows.

The parking space P may be detected using the ultrasonic sensors 8 provided on the rear side of the vehicle.

In the above illustrated embodiment, the parking space P between two vehicles is detected. Instead, the parking space P between two obstacles such as two walls may be detected in a similar manner.

When there are two obstacles with a parking space P in between along the side edge of the road, the distance from the originating corner (a corner on the side opposite to the side edge of the road) of a first one of the two obstacles to the side edge of the road may be different from the distance from the originating corner (a corner on the side opposite to the side edge of the road) of a second one of the two obstacles to the side edge of the road.

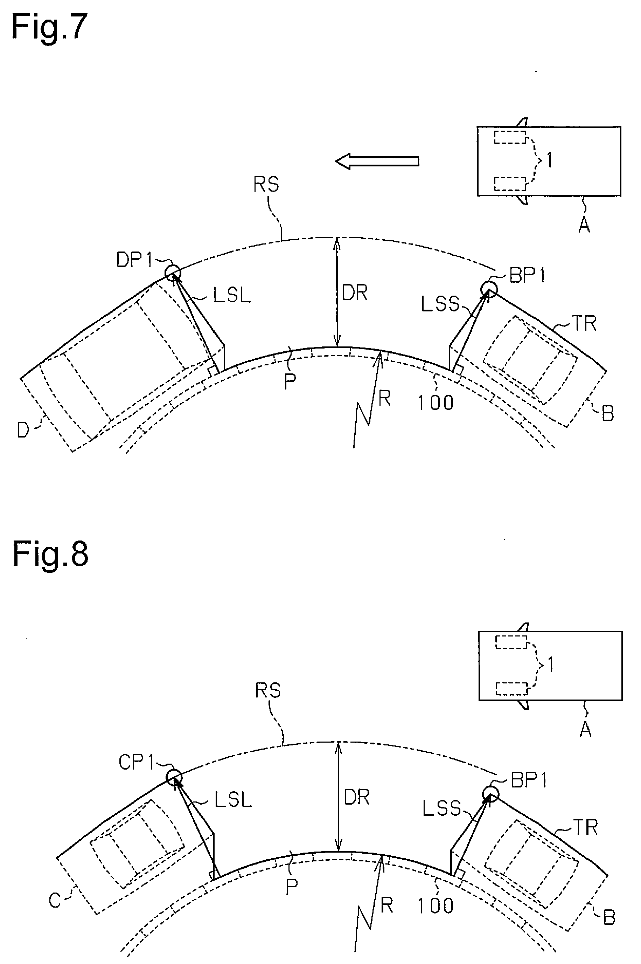

For example, when the two obstacles are different in size, the distance from the originating corner of the larger one of the obstacles to the side edge of the road is longer than the distance from the originating corner of the smaller one of the obstacles to the side edge of the road. One example of such cases is shown in Fig. 7.

Fig. 7 illustrates a case in which there is a parking space P between the front end of a first vehicle B and the rear end of a third vehicle D. The width of the third vehicle D is greater than the width of the first vehicle B. Further, a first corner BP1, which is one corner at the front end of the first vehicle B on the side opposite to a curbstone 100, is defined as the originating corner of the first obstacle. On the other hand, a fifth corner DP1, which is one corner at the rear end of the third vehicle D on the side opposite to the curbstone 100, is defined as the originating corner of the second obstacle. In this case, a distance LSL from the fifth corner DP1 to the curbstone 100 is longer than a distance LSS from the first corner BP1 to the curbstone 100.

Further, even if the two obstacles are substantially in the same size, when the distances from the side edge of the road to the obstacles are different from each other, the distance between the originating corner of the obstacle that is more distant from the side edge of the road and the side edge of the road is longer than the distance between the originating corner of the obstacle that is closer to the side edge of the road and the side edge of the road. One example of such cases is shown in Fig. 8.

Fig. 8 illustrates a case in which there is a parking space P between the front end of a first vehicle B and the rear end of a second vehicle C. Further, although the first vehicle B and the second vehicle C are substantially in the same size, the distances from the curbstone 100 to the vehicles are different from each other, and the first vehicle B is parked at a position closer to the curbstone 100 than the second vehicle C is. Moreover, a first corner BP1, which is one corner at the front end of the first vehicle B on the side opposite to a curbstone 100, is defined as the originating corner of the first obstacle. On the other hand, a second corner CP1, which is one corner at the rear end of the second vehicle C on the side opposite to the curbstone 100, is defined as the originating corner of second obstacle. In this case, a distance LSL from the second corner CP1 to the curbstone 100 is longer than a distance LSS from the first corner BP1 to the curbstone 100.

When the lengths from the originating corners to the side edge of the road are different from each other, the width of the parking space P recognized by the electronic control unit 9 (the arc width DR) is longer in a case in which the imaginary line RS is extended from the originating corner of which the distance to the side edge of the road is longer than in a case in which the imaginary line RS is extended from the originating corner of which the distance to the side edge of the road is shorter. Accordingly, the recognized parking space P is easily determined by the electronic control unit 9 to be a parkable space.

Therefore, when the distances from the originating corners to the side edge of the road are different from each other, it is possible to extend the imaginary line RS from the originating corner of which the distance to the side edge of the road is longer. In the example shown in Fig. 7, it is possible to extend the imaginary line RS from the fifth corner DP1 to the first vehicle B. Further, in the example shown in Fig. 8, it is possible to extend the imaginary line RS from the second corner CP1 to the first vehicle B.

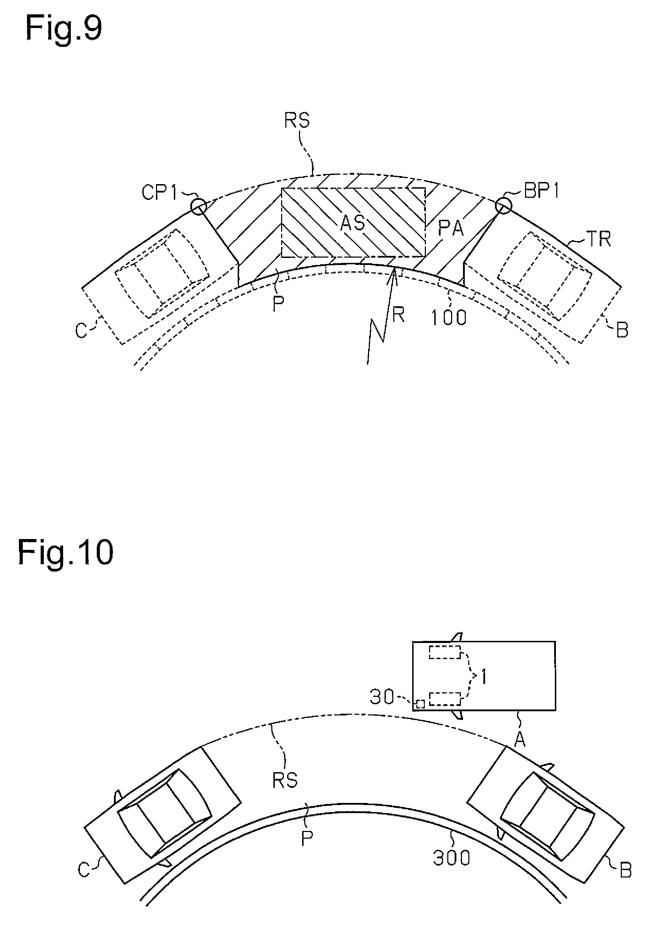

In the above embodiment, determination on whether the host vehicle A can be parked at the parking space P is made based on the vehicle length L, the vehicle width W, and the arc width DR. However, the determination may be made in a different manner. One example of such cases is shown in Fig. 9.

Fig. 9 illustrates a case in which the electronic control unit 9 recognizes, as a parking space P, a space PA located between the first vehicle B and the second vehicle C and between the imaginary line RS and the curbstone 100. Further, an occupied area AS of the host vehicle A is recorded in the electronic control unit 9. When the occupied area AS of the host vehicle A will entirely fit into the recognized parking space P, it is possible to determine that the host vehicle A can be parked at the detected parking space P. This further improves the accuracy in the determination on whether parking at the parking space P.

When the curbstone 100 is configured by a plurality of curvature radii R, the imaginary curvature radius RR may be calculated for each of the curvature radii R to set the imaginary line RS.

From the sequence of the procedure shown in Fig. 6, Step S140 and Step S150 may be omitted. When positive determination is made in Step S130, Step S160 may be performed. Also in this case, the parkable space is reliably detected, at least when parking along the side edge of the road curved in a convex manner with respect to the host vehicle.

The minimum distance between the front end of the first vehicle B and the rear end of the second vehicle C (e.g., the distance between the first corner BP1 and the second corner CP1) is calculated as the parking length DL of the detected parking space P. Instead, when only one parked vehicle is detected as a result of the detection of the parking space, a previously prepared value, which is the minimum length of the parking space P required for execution of the parking control, may be set as the parking length DL.

The curbstone 100 is detected by the ultrasonic sensor. Instead, a camera 30 may be provided on the side of the vehicle, for example, as shown in Fig. 10. In a case in which a road edge indicator 300 curved in a convex manner with respect to the host vehicle A is painted along a curved road in place of the curbstone 100 along the side edge of the road, an image taken by the camera 30 that shows the road edge indicator 300 is processed to obtain the shape of the road edge indicator 300. Then, the imaginary line RS may be calculated based on the shape of the obtained road edge indicator 300.

The clearance sonars 5 and 7 and the ultrasonic sensors 6 and 8 are devices for searching the surrounding area using ultrasonic waves. Instead, it is possible to use devices searching the surrounding area using radio waves or laser.

### DESCRIPTION OF THE REFERENCE NUMERALS

1: steering wheel
2: steering device
2a: motor
3: display panel
4: loudspeaker
5: clearance sonar
6: ultrasonic sensor
7: clearance sonar
8: ultrasonic sensor
9: electronic control unit
10: shift lever
11: shift position sensor
12: accelerator pedal
13: accelerator position sensor
14: brake pedal
15: brake switch
16: wheel speed sensor
17: angle sensor
30: camera
100: (straight) curbstone
200: (curved) curbstone
300: traffic sign
A: host vehicle
B: first vehicle
C: second vehicle
D: third vehicle

## Claims

1. A parking assistance device adapted to assist parking of a host vehicle at a parking space, the device comprising:
a detector, which is configured to detect a shape of a side edge of a road and an obstacle at the side edge of the road;
a recognizing section, which is configured to set one corner of the obstacle on a side opposite to the side edge of the road as an originating corner, set an imaginary line that follows the shape of the side edge of the road and extends from the originating corner, and recognize a space between the imaginary line and the side edge of the road as a parking space;and
a determining section, which is configured to determine whether parking of the host vehicle is possible at the parking space recognized by the recognizing section.

2. The parking assistance device according to claim 1, wherein the recognizing section is configured to set the imaginary line, when the shape of the side edge of the road detected by the detector is curved in a convex manner toward the host vehicle.

3. The parking assistance device according to claim 1 or 2, wherein, when two obstacles are detected by the detector and a distance from an originating corner of a first one of the obstacles to the side edge of the road is different from a distance from an originating corner of a second one of the obstacles to the side edge of the road, the recognizing section is configured to extend the imaginary line from the originating corner of one of the obstacles of which the distance to the side edge of the road is longer.

4. The parking assistance device according to any one of claims 1 to 3, wherein the determining section is configured to determine that parking of the host vehicle at the parking space is possible, when a length of the host vehicle is shorter than a length of the parking space, and a width of the host vehicle is shorter than a width of the parking space.

5. The parking assistance device according to any one of claims 1 to 3, wherein the determining section is configured to determine that parking of the host vehicle at the parking space is possible when an entire area occupied by the host vehicle will fit into the parking space.
